# FASCICULE DE BREVET EUROPEEN

(11) **EP 2 390 299 B1**
(45) Date de publication et mention de la délivrance du brevet: **18.06.2014**
(21) Numéro de dépôt: 11165125.3
(22) Date de dépôt: 06.05.2011
(51) Int. Cl.: C09J 153/02, C09J 7/04, B32B 7/12, B32B 27/08

(54) **HMPSA pour étiquette auto-adhésive décollable**
HMPSA für selbstklebende leicht entfernbare Etiketten
HMPSA for autoadhesive labels that can be easily removed

(30) Priorité: 11.05.2010 FR 1002001
(43) Date de publication de la demande: 30.11.2011
(73) Titulaire: BOSTIK SA, 93210 La Plaine-St-Denis (FR)
(72) Inventeur: Goubard, M. David, 60200 COMPIEGNE (FR); Sajot, M. Nicolas, 60280 CLAIROIX (FR)
(74) Mandataire: Granet, Pierre

(56) Documents cités:
- WO-A2-2008/029065
- FR-A1- 2 918 069
- US-A1- 2004 220 308

## Description

La présente invention a pour objet une composition adhésive thermofusible sensible à la pression, convenant au collage d'étiquettes auto-adhésives qui sont décollables durant un procédé de recyclage des articles auxquels elles ont été fixées (tels que des emballages et/ou récipients, par exemple des bouteilles de verre). Elle concerne également un système multicouche comprenant une couche constituée de ladite composition, une étiquette auto-adhésive, l'article étiqueté correspondant, ainsi qu'un procédé de recyclage dudit article comprenant une étape de décollement de l'étiquette.

Bien des emballages et/ou récipients étiquetés sont soumis, après élimination de leur contenu, à des traitements de nettoyage (ou de recyclage) soit en vue de leur réutilisation, soit, après destruction, en vue de la récupération du matériau qui les constitue. De tels traitements nécessitent souvent de séparer complètement l'étiquette de l'article auquel elle est fixée, sans laisser de résidus d'adhésif à la surface de ce dernier, de manière à faciliter le procédé de recyclage.

Ces procédés de recyclage, tels que celui mis en oeuvre pour le nettoyage des bouteilles de verre usagées, comprennent généralement une étape d'immersion de l'article à nettoyer dans des compositions aqueuses basiques maintenues à des températures comprises entre 60 et 100°C. Une telle étape a également pour but le décollement et la séparation de l'étiquette fixée sur l'article.

Les adhésifs sensibles à la pression (également dénommés colles auto-adhésives ou encore, en anglais, "Pressure Sensitive Adhesives" ou PSA) sont des substances conférant au support qui en est revêtu un pouvoir collant immédiat à température ambiante (souvent désigné sous le terme de "tack"), lequel permet son adhésion instantanée à un substrat sous l'effet d'une pression légère et brève. Les PSA sont largement utilisés pour la fabrication d'étiquettes auto-adhésives qui sont fixées sur des articles à des fins de présentation d'informations (telles que code barre, dénomination, prix) et/ou à des fins décoratives.

Les PSA sont généralement appliqués par des procédés d'enduction en continu sur la totalité de la surface d'une couche support imprimable de grandes dimensions, constituée de papier ou de film d'un matériau polymère à une ou plusieurs couches. La couche d'adhésif qui recouvre la couche support imprimable (généralement la face opposée à la face imprimable) est elle-même recouverte d'une couche protectrice (souvent dénommée par l'appellation anglaise de "release liner"), par exemple constituée d'un film siliconé. Le système multicouche obtenu est généralement conditionné par enroulement sous forme de larges bobines ayant jusqu'à 2 m de largeur et 1 m de diamètre, qui peuvent être stockées et transportées.

Ce système multicouche peut être ultérieurement converti en étiquettes auto-adhésives applicables par l'utilisateur final, au moyen de procédés de transformation qui incluent l'impression des éléments informatifs et/ou décoratifs désirés sur la face imprimable de la couche support, puis la découpe à la forme et aux dimensions souhaitées. La couche protectrice peut être facilement enlevée sans modification de la couche d'adhésif qui reste fixée sur la couche support imprimable. Après séparation de sa couche protectrice, l'étiquette est appliquée à une température proche de la température ambiante sur l'article à revêtir soit manuellement, soit à l'aide d'étiqueteuses sur des chaînes automatisées de conditionnement.

Les PSA permettent, en raison de leur tack élevé à température ambiante, une prise ou accroche rapide de l'étiquette sur l'article à revêtir (par exemple des bouteilles), convenant à l'obtention de cadences de production industrielle importantes.

Le brevet US3763117 décrit un PSA à base d'acrylate avec de bonnes propriétés adhésives qui permet une séparation facile à chaud par une solution aqueuse basique.

Le brevet US5385965 décrit également un PSA permettant, après enduction sur un support papier ou film d'un matériau polymère, l'obtention d'une étiquette qui se détache du substrat sous l'action d'une solution alcaline à chaud. Ce PSA se présente sous la forme d'une émulsion aqueuse d'un copolymère à base d'acrylate ou d'un copolymère de type styrène-butadiène. La teneur en extrait sec de cette émulsion ne dépasse pas 70 %, de sorte que l'enduction de ce PSA sur la couche support est compliquée par la nécessité d'une étape de séchage de l'émulsion. De plus, de tels adhésifs ont pour inconvénient de passer partiellement en solution ou en suspension dans les compositions aqueuses mises en oeuvre pour le recyclage des bouteilles étiquetées, ce qui induit pour les installations industrielles des contraintes de retraitement de ces compositions avant rejet dans l'environnement.

On connaît par les demandes internationales WO 2008/110685 et WO 2009/016285 des compositions adhésives thermofusibles sensibles à la pression comprenant un copolymère bloc styrénique, une résine tackifiante et un acide gras, sous forme acide ou sous forme de sel métallique.

Ces compositions permettent, après enduction sur une couche support, l'obtention d'une étiquette auto-adhésive qui peut être collée de façon permanente sur un article, comme par exemple une bouteille de verre, et qui peut en outre être ensuite décollée rapidement et complètement durant une étape d'immersion de l'article étiqueté dans une solution aqueuse basique à température élevée, l'adhésif restant essentiellement fixé sur l'étiquette après sa séparation.

Les adhésifs thermofusibles (souvent désignés sous l'appellation anglaise de "Hot Melt adhesives" ou HM) sont des substances solides à température ambiante qui ne contiennent ni eau ni solvant. Ils sont appliqués à l'état fondu et se solidifient lors du refroidissement, formant ainsi un joint qui assure la fixation des substrats à assembler. Ces adhésifs thermofusibles se présentent habituellement sous la forme de compositions qui comprennent un polymère thermoplastique et éventuellement une résine tackifiante et un plastifiant. Certains Hot Melt sont formulés de manière à conférer au support qui en est revêtu un caractère relativement dur et dénué de tack. D'autres Hot Melt assurent au support un caractère relativement mou et un tack important : ce sont des PSA qui sont largement utilisés pour la fabrication d'étiquettes auto-adhésives ; les adhésifs correspondants sont désignés par l'appellation d' "adhésifs thermofusibles sensibles à la pression" ou "auto-adhésifs thermofusibles" ou encore par l'appellation anglaise de "Hot Melt Pressure Sensitive Adhesive" (ou HMPSA).

La présente invention a pour but de proposer, notamment, un nouvel HMPSA apportant une réponse alternative au problème résolu par les compositions des demandes WO 2008/110685 et WO 2009/016285. Il est en effet toujours souhaitable d'enrichir l'état de la technique et de proposer aux fabricants d'étiquettes auto-adhésives des solutions nouvelles propres à satisfaire les besoins de leurs clients et présentant, le cas échéant, des propriétés améliorées, par exemple en ce qui concerne le temps ou la vitesse de décollement.

L'invention concerne donc en premier lieu une composition adhésive thermofusible sensible à la pression (HMPSA) comprenant :
- a) de 25 à 50 % d'un ou plusieurs copolymères blocs styréniques choisis dans le groupe comprenant les SBS, SIS, SIBS, SEBS et SEPS ;
- b) de 35 à 75 % d'une ou plusieurs résines tackifiantes compatibles liquides ou ayant une température de ramollissement inférieure à 150 °C ;
- c) de 1 à 20 % d'un ou plusieurs polymères supramoléculaires obtenus par réaction entre :
   - la 1-(2-aminoéthyl)-2-imidazolidone (également dénommée Uréïdo DiEthylène TriAmine ou UDETA) de formule (I) : 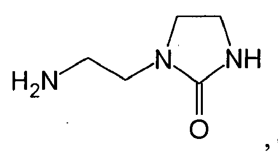 et
   - une composition d'acides gras comprenant :
      - de 51 à 100 % d'un ou plusieurs dimères d'acides gras identiques ou différents et/ou d'un ou plusieurs trimères d'acides gras identiques ou différents ; et
      - de 0 à 49 % d'un ou plusieurs monomères d'acides gras identiques ou différents.

En l'absence d'indication contraire, les pourcentages utilisés dans le présent texte pour exprimer des quantités correspondent à des pourcentages poids/poids.

Les copolymères blocs utilisables dans l'HMPSA selon l'invention ont une masse molaire moyenne en poids Mw généralement comprise entre 60 kDa et 400 kDa et sont constitués de blocs de différents monomères polymérisés. Ils ont une configuration de tri-bloc de formule générale :

A-B-A (II)

dans laquelle :
- A représente un bloc non élastomère styrénique (ou polystyrène), et
- B représente un bloc dit élastomère qui peut être :
   - le polybutadiène : le copolymère bloc a alors pour structure :
      polystyrène- polybutadiène- polystyrène, et pour dénomination : SBS
   - le polyisoprène : le copolymère bloc a alors pour structure :
      polystyrène-polyisoprène-polystyrène, et pour dénomination : SIS ;
   - le polyisoprène-polybutadiène : le copolymère bloc a alors pour structure polystyrène-polyisoprène-polybutadiène-polystyrène, et pour dénomination : SIBS
   - le polyisoprène hydrogéné totalement ou en partie : le copolymère bloc a alors pour structure : polystyrène-poly(éthylènepropylène)- polystyrène et pour dénomination : SEPS ;
   - le polybutadiène hydrogéné totalement ou en partie : le copolymère bloc a alors pour structure : polystyrène-poly(éthylènebutylène)- polystyrène et pour dénomination : SEBS. Ce copolymère SEBS peut éventuellement avoir été modifié chimiquement avec de l'anhydride maléïque.

Ces copolymères styréniques tri-blocs peuvent être obtenus selon des procédés connus en soi et sont disponibles commercialement. Les procédés d'obtention de ces produits commerciaux conduisent également en général à la formation de quantités variables de composés di-blocs de formule A-B. Ainsi, au sens du présent texte, les termes SBS, SIS, SIBS, SEBS et SEPS désignent en fait des mélanges de tri-blocs et de di-blocs. La quantité de di-blocs peut varier sans inconvénient de 0 à 90 % sur la base du poids total de copolymères styréniques compris dans la composition selon l'invention. Outre la structure linéaire de formule (II), les copolymères styréniques tri-blocs utilisables dans l'HMPSA selon l'invention peuvent également présenter une structure radiale.

Il est bien entendu que le ou les copolymères blocs styréniques inclus dans l'HMPSA selon l'invention qui sont choisis dans le groupe comprenant les SBS, SIS, SIBS, SEBS et SEPS peuvent appartenir à une seule ou à plusieurs de ces 5 familles de copolymères.

La quantité de bloc styrénique peut quant à elle varier dans de larges limites, comme par exemple de 15 % à 50 % (sur la base du poids total de copolymères blocs compris dans l'HMPSA selon l'invention).

On peut citer comme exemples de produits commerciaux :
- de SBS : l'Europrène^{®} Sol T 166 (10% de di-bloc et 30% de styrène) de la société Polimeri Europa (Italie), le Stéréon^{®} 840A de la société Firestone (45 % de styrène), le Kraton^{®} D1120 (75% de di-bloc et 30% de styrène) ;
- de SIS linéaire : le Vector^{®} 4411 de la société ExxonMobil ayant une teneur en di-bloc de 0 % et une teneur en styrène de 44%, le Kraton^{®} D1113 de la société Kraton (56% de di-bloc et 16% de styrène), le Kraton^{®} D1165 (25% de di-bloc et 30% de styrène) ;
- de SIS radial : le Kraton^{®} D1 124 (29% di-bloc et 30% styrène), le Vector^{®} DPX 586 (80% de di-bloc et 18 % de styrène) de la société ExxonMobil ;
- de SIBS : le Kraton^{®} MD 6455 (35% de di-bloc et 18% de styrène)
- de SEBS : le Kraton^{®} G1726 (70% de di-bloc et 30 % de styrène), le Kraton^{®} G1924 (30 % de di-bloc et 13 % de styrène) qui est un SEBS greffé avec 1% d'anhydride maléïque.

Selon une variante préférée de l'HMPSA selon l'invention, la teneur en copolymère bloc styrénique varie de 30 à 50 %, et encore plus préférentiellement de 35 à 45 %.

Selon une autre variante également préférée, on utilise comme copolymère bloc styrénique pour l'HMPSA selon l'invention un SIS linéaire ou radial.

La ou les résines tackifiantes utilisables dans l'HMPSA selon l'invention ont des masses molaires moyennes en poids M_{w} généralement comprises entre 200 et 5000 Da et sont choisies notamment parmi :
- (i) des colophanes d'origine naturelle ou chimiquement modifiées, telles que par exemple la colophane extraite de la gomme de pins, la colophane de bois extraite des racines de l'arbre et leurs dérivés hydrogénés, dimérisés, polymérisés ou estérifiés par des monoalcools ou des polyols comme le glycérol, le pentaérythritol ou le néopentylglycol ;
- (ii) des résines obtenues par hydrogénation, polymérisation ou copolymérisation (avec un hydrocarbure aromatique) de mélanges d'hydrocarbures aliphatiques insaturés ayant environ 5, 9 ou 10 atomes de carbone issus de coupes pétrolières ;
- (iii) des résines terpéniques résultant généralement de la polymérisation d'hydrocarbures terpéniques comme par exemple le mono-terpène (ou pinène) en présence de catalyseurs de Friedel-Crafts, éventuellement modifiées par action de phénols ;
- (iv) des copolymères à base de terpènes naturels, par exemple le styrène/terpène, l'alpha-méthyle styrène/terpène et le vinyle toluène/terpène.

On sélectionne pour inclusion dans l'HMPSA selon l'invention les résines tackifiantes liquides à température ambiante ou qui ont une température de ramollissement inférieure à 150 °C.

La température (ou point) de ramollissement est déterminée conformément au test normalisé ASTM E 28 dont le principe est le suivant. Un anneau en laiton de diamètre environ 2 cm est rempli de la résine à tester à l'état fondu. Après refroidissement à température ambiante, l'anneau et la résine solide sont placés horizontalement dans un bain de glycérine thermostaté dont la température peut varier de 5° C par minute. Une bille d'acier de diamètre environ 9,5 mm est centrée sur le disque de résine solide. La température de ramollissement est -durant la phase de montée en température du bain à raison de 5°C par minute- la température à laquelle le disque de résine flue d'une hauteur de 25,4 mm sous le poids de la bille.

Les résines tackifiantes sont disponibles commercialement, et parmi celles qui sont liquides ou qui ont une température de ramollissement inférieure à 150 °C, on peut citer par exemple dans les familles ci-dessus les produits suivants :
(i) Sylvalite^{®} RE 100S (ester de colophane et de pentaérythritol ayant une température de ramollissement d'environ 100°C), et Sylvatac^{®} RE 12 (ester de colophane liquide à température ambiante), ces 2 produits étant disponibles auprès de la société Arizona Chemical, Dertoline^{®} G2L (température de ramollissement de 87°C) et Dertopoline^{®} CG (température de ramollissement de 117°C) de la société française DRT ;
(ii) Escorez^{®} 5600 disponible auprès de ExxonMobil Chemical qui est une résine dicyclopentadiène hydrogénée modifiée par un composé aromatique (ayant un M_{W} d'environ 980 Da et une température de ramollissement de 100°C) ; l'Escorez^{®} 5615 de structure analogue (température de ramollissement de 115°C), Escorez^{®} 5400 également de la société Exxon Chemicals (température de ramollissement de 100°C) ; Wingtack^{®} 86 de la société Cray-Valley ; Régalite^{®} R5100 de Eastman ;
(iii) Dertophène^{®} T de la société DRT (ayant une température de ramollissement de 95°C) ; Sylvarez^{®} TP95 de Arizona Chemical qui est une résine terpène phénolique avec une température de ramollissement de 95°C et un M_{w} d'environ 1120 Da ;
(iv) Sylvarez^{®} ZT 105 LT de Arizona Chemical qui est un copolymère styrène/terpène avec un point de ramollissement de 105°C.

Par résine tackifiante compatible, on entend désigner une résine tackifiante qui lorsqu'elle est mélangée dans les proportions 50 %/50 % avec un copolymère bloc choisi dans le groupe comprenant les SBS, SIS, SIBS, SEBS et SEPS, donne un mélange substantiellement homogène.

Les résines tackifiantes liquides ou ayant une température de ramollissement comprise entre 90 et 120°C sont préférées, comme par exemple la Sylvatac^{®} RE 12, l'Escorez^{®} 5615, la Sylvarez^{®} ZT 105 LT ou encore la Sylvalite^{®} RE 100S.

La teneur en résine tackifiante de l'HMPSA selon l'invention est avantageusement comprise entre 40 et 55%.

La composition adhésive thermofusible sensible à la pression selon l'invention comprend de 1 à 20 % du polymère supramoléculaire tel que défini précédemment.

L'expression "polymère supramoléculaire" désigne une structure chimique qui est constituée par les molécules d'un même composé reliées entre elles par des liaisons de type hydrogène. Cette expression dérive par analogie du terme "polymère" qui est classiquement utilisé pour désigner une structure chimique obtenue par l'établissement de liaisons chimiques covalentes entre une (dans le cas d'un homopolymère) ou plusieurs (dans le cas d'un copolymère) unités répétitives appelées "motifs". Par analogie, le composé constituant un polymère supramoléculaire est également désigné par le terme de "motif".

Le polymère supramoléculaire compris dans la composition selon l'invention peut dériver d'un ou plusieurs motifs dont la masse peut varier de 200 à 9000 g/mole, de préférence de 200 à 2000 g/mole.

Les motifs du polymère supramoléculaire comprennent au moins une fonction amide et un radical dérivant de l'imidazolidone de l'UDETA. Ces groupes (dits associatifs) permettent l'établissement de liaisons de type hydrogène entre les molécules correspondant à ces motifs, qui résulte dans la structuration de ces molécules en polymères supramoléculaires.

Un tel polymère supramoléculaire est décrit dans la demande internationale WO 2008/029065 qui mentionne simplement, parmi diverses utilisations, une utilisation comme additif pour des colles thermofusibles et des colles sensibles à la pression.

Il a à présent été trouvé que l'incorporation dudit polymère supramoléculaire dans l'HMPSA selon l'invention permet, dans le domaine de teneur indiqué, l'obtention d'une composition auto-adhésive thermofusible dont le caractère homogène lui permet sans inconvénient d'être conservée à l'état fondu dans un bac (également appelé fondoir) à une température allant jusqu'à 160°C, durant plusieurs heures et jusqu'à 1 ou 2 jours, et ce préalablement à son enduction sur une couche support imprimable. En outre, l'étiquette auto-adhésive qui résulte du système multicouche correspondant convient à l'étiquetage d'un article, notamment en verre, et permet le décollement facile et rapide de l'étiquette durant une étape d'immersion dudit article en milieu aqueux basique. Durant cette dernière étape, la composition auto-adhésive reste pour l'essentiel fixée à la couche support de l'étiquette, sans laisser de trace sur la surface de l'article. Ainsi, elle ne se dissout pas, ni ne se disperse (ou seulement dans de très faibles proportions) dans les compositions aqueuses mises en oeuvre dans le traitement de recyclage, ce qui évite des traitements supplémentaires de dépollution des bains de lavage.

Le polymère supramoléculaire compris dans l'HMPSA selon l'invention est obtenu par réaction de l'UDETA de formule (I), avec la composition d'acides gras telle que définie ci-dessus.

Les acides gras dimères et trimères sont obtenus par polymérisation à haute température et sous pression d'acides gras insaturés, dits "monomères", qui comprennent de 6 à 22 atomes de carbones, de préférence de 12 à 20, et proviennent de sources végétales ou animales. On peut citer comme exemples de tels acides gras insaturés (monomères) les acides en C18 ayant une ou deux doubles liaisons (respectivement l'acide oléique ou linoléique) obtenus à partir de tallöl (ou tall oil) qui est un sous-produit de la fabrication de la pâte à papier.

Après polymérisation de ces acides gras insaturés, on obtient un mélange technique contenant en moyenne 30-35 % d'acides monocarboxyliques (acides monomères) souvent isomérisés par rapport aux acides de départ, 60-65 % d'acides dicarboxyliques (acides dimères) avec le double de nombre de carbone par rapport aux acides de départ et 5-10 % d'acides tricarboxyliques (acides trimères) ayant le triple de nombre de carbone par rapport aux acides de départ. Par purification de ce mélange on obtient les différents grades commerciaux d'acides dimères, monomères ou trimères qui peuvent exister sous forme hydrogénée ou non hydrogénée. Parmi ceux-ci on peut citer la gamme Pripol^{®} développée par la Société Uniqema.

Selon un mode de réalisation plus particulièrement préféré, le polymère supramoléculaire est obtenu par une réaction, selon des quantités sensiblement stoechiométriques, de l'UDETA de formule (I) avec une composition d'acides gras monomères et/ou dimères et/ou trimères issus de la polymérisation d'acides gras monomères insaturés majoritairement en C18, ladite composition comprenant de 0 à 10 % de monomères et de 90 à 100 % de mélange de dimères et trimères.

Selon une variante encore plus préférée de l'invention, la composition d'acides gras avec lequel on fait réagir l'UDETA de formule (I) comprend de 0 à 5 % de monomères et de 95 à 100 % de mélange de dimère et trimère.

On peut citer comme exemples de tels mélanges :
- le Pripol^{®} 1017, mélange d'environ 1-3 % d'acides gras monomères, 75-80 % de dimères et 18-22 % de trimères ;
- le Pripol^{®} 1040, mélange d'environ 0-1 % d'acides gras monomères, 20-25 % de dimères et 75-80 % de trimères ;
- le Pripol^{®} 1013, mélange d'environ 0-1 % d'acides gras monomères, 95-98 % de dimères et 2-4 % de trimères ;
- l'Unidyme^{®} 14 d'Arizona Chemicals, mélange d'environ 0-1 % d'acides gras monomères, 94-97 % de dimères et 2-5 % de trimères.

Le polymère supramoléculaire obtenu par réaction de l'UDETA de formule (I) avec le Pripol^{®} 1017 est désigné ci-après par le terme de SUPRA(Pripol^{®} 1017). Le motif correspondant a une masse molaire moyenne d'environ 900 g/mole. Il est fait référence pour sa préparation à la demande internationale WO 2008/029065 pré-citée et notamment à l'exemple 8.

De même, on désigne ci-après par les termes SUPRA(Pripol^{®} 1040), SUPRA(Pripol^{®} 1013), SUPRA(Unidyme^{®} 14) le polymère supramoléculaire obtenu par réaction de l'UDETA^{®} de formule (I) avec le mélange d'acides gras correspondant.

Selon une autre variante préférée de l'invention, la teneur dans l'HMPSA du polymère supramoléculaire est comprise entre 3 et 15 %.

Une quantité de 0,1 à 2 % d'un ou plusieurs stabilisants ou anti-oxydants est en outre de préférence incluse dans la composition selon l'invention. Ces composés sont introduits pour protéger la composition d'une dégradation résultant d'une réaction avec de l'oxygène qui est susceptible de se former par action de la chaleur, de la lumière ou de catalyseurs résiduels sur certaines matières premières telles que les résines tackifiantes. Ces composés peuvent inclure des anti-oxydants primaires qui piègent les radicaux libres et sont généralement des phénols substitués comme l'Irganox^{®} 1010 de CIBA. Les anti-oxydants primaires peuvent être utilisés seuls ou en combinaison avec d'autres anti-oxydants tels que des phosphites comme l'Irgafos^{®} 168 également de CIBA, ou encore avec des stabilisants UV tels que des amines.

La composition selon l'invention peut également inclure jusqu'à 20 % d'un plastifiant. Ce plastifiant peut être une huile paraffinique et naphténique qui peut contenir une fraction de composés aromatiques (comme le Nyflex^{®} 222B de la société Nynas) ou ne pas contenir de telle fraction (comme le Primol^{®} 352 de la société ESSO).

La composition selon l'invention peut encore inclure une cire d'un homopolymère de polyéthylène (comme l'A-C^{®} 617 de Honeywell) ou bien une cire d'un copolymère de polyéthylène et d'acétate de vinyle, ou encore des pigments, des colorants ou des charges.

La composition thermofusible auto-adhésive selon l'invention est préparée par simple mélange de ses composants à une température comprise entre 130 et 200 °C, jusqu'à obtention d'un mélange homogène. Les techniques de mélange requises sont bien connues de l'homme du métier.

La présente invention a également pour objet un système multicouche comprenant :
- une couche d'adhésif constituée de la composition adhésive thermofusible sensible à la pression selon l'invention ;
- une couche support imprimable adjacente à ladite couche d'adhésif, constituée de papier ou de film polymère à une ou plusieurs couches ; et
- une couche protectrice adjacente à ladite couche d'adhésif.

On préfère utiliser comme couche support imprimable :
- du papier ayant un grammage compris entre 60 et 110 g/m², ou
- un film thermo-rétractable constitué de PET ou de PVC (disponible commercialement sous la dénomination Pentalabel^{®}, auprès de la société Klöckner) ou d'OPP ; ou encore
- un film bi-couche OPP/PET dont la couche d'OPP est adjacente à la couche d'adhésif.

L'épaisseur de la couche d'adhésif dans le système multicouche correspond à une quantité d'HMPSA généralement comprise entre 7 et 50 g/m², exprimée par unité de surface de la couche support.

L'HMPSA selon l'invention est appliqué sur ladite couche support à l'état fondu à une température allant de 130°C à 180°C. L'application est réalisée par des techniques d'enduction connues comme par exemple de type buse à lèvre (à une température d'environ 160 à 180°C) ou de type rideau (à une température d'environ 120 à 180 °C). L'application de l'HMPSA par buse à lèvre est généralement effectuée sur la couche protectrice, l'ensemble étant alors contrecollé sur la couche support (enduction par transfert). L'application de l'HMPSA par enduction de type rideau peut être directement réalisée sur la couche support, en fonction de la température d'enduction.

Le système multicouche obtenu se présente sous la forme d'un rectangle de très grande longueur, et est généralement conditionné par enroulement sous forme d'une large bobine ayant jusqu'à 2 m de largeur et 1 m de diamètre.

L'invention concerne également une étiquette auto-adhésive susceptible d'être obtenue par transformation du système multicouche décrit précédemment. Le procédé de transformation mis en oeuvre comprend généralement :
- une étape d'impression sur la couche support imprimable, puis
- une étape de découpe du système multicouche de manière à en réduire la largeur, et donc à le reconditionner sur une bobine de largeur réduite, puis
- une étape (qualifiée d'échenillage) d'obtention d'un système multicouche, conditionné sur la bobine de l'étape précédente, dans lequel la couche protectrice inchangée est liée à la seule partie de la couche support imprimée qui correspond à la forme et aux dimensions de l'étiquette auto-adhésive adaptées à son utilisation finale. Cette étape consiste donc en la découpe sélective, puis en l'élimination de la partie indésirable de la couche support et de la couche d'adhésif, ladite partie étant souvent appelée "squelette de l'étiquette".

Ce dernier système multicouche est mis en oeuvre sur les chaînes de conditionnement des articles à étiqueter au moyen de systèmes automatisés qui séparent les étiquettes auto-adhésives de la couche protectrice, et les fixent sur les articles à étiqueter.

L'invention a également pour objet un article revêtu de l'étiquette auto-adhésive telle que définie précédemment.

L'article étiqueté est de préférence un emballage ou récipient constitué de verre ou d'une matière plastique usuelle choisie parmi le PolyEthylène Téréphtalate (PET), le PolyChlorure de Vinyle (PVC), le PolyEthylène (PE) ou le PolyPropylène (PP).

Une bouteille de verre est plus particulièrement préférée. Les bouteilles de verre concernées peuvent ou non avoir reçu au cours de leur fabrication un traitement d'enduction destiné à maintenir dans le temps leurs propriétés mécaniques et à les protéger contre les rayures. Un tel traitement conduit par exemple au dépôt à la surface du verre d'une couche d'oxyde métallique, éventuellement recouverte d'une couche supplémentaire de nature cireuse.

L'invention concerne enfin un procédé de recyclage d'un article étiqueté, comprenant une étape de décollement de l'étiquette par immersion de l'article étiqueté dans une solution aqueuse basique maintenue à une température comprise entre 60 et 100 °C, caractérisé en ce que l'article étiqueté est tel que défini précédemment.

Le décollement de l'étiquette par ce procédé aboutit avantageusement à sa séparation complète de l'article, sans laisser à la surface de ce dernier de résidu d'adhésif et sans que la composition adhésive ne contamine la solution aqueuse basique de lavage. Dans le cadre d'une mise en oeuvre industrielle du procédé, il en résulte une moindre pollution des eaux de lavage et une économie améliorée du procédé de recyclage, notamment au plan de la quantité d'eau consommée. Les étiquettes ainsi séparées des articles traités peuvent être rassemblées et évacuées du bain de lavage par des moyens mécaniques appropriés.

Le procédé objet de l'invention est de préférence mis en oeuvre à une température d'environ 80°C.

Le pouvoir adhésif de l'HMPSA selon l'invention est évalué par le test de pelage (ou peel) à 180°C sur plaque de verre tel que décrit dans la méthode de test FINAT n° 1, publiée dans le Manuel Technique FINAT 6^{ème} édition, 2001. FINAT est la fédération internationale des fabricants et transformateurs d'étiquettes auto-adhésives. Le principe de ce test est le suivant.

L'HMPSA est préalablement enduit à raison de 20 g/m² sur un film thermo-rétractable en PVC d'épaisseur 50 µm, qui présente après immersion dans de l'eau à 95°C pendant 30 s un taux de rétractation d'environ 72 %.

Une éprouvette sous forme de bande rectangulaire (25 mm x 175 mm) est découpée dans le support auto-adhésif ainsi obtenu. Cette éprouvette est fixée sur un substrat constitué d'une plaque de verre. L'assemblage obtenu est laissé 1 heure à température ambiante. Il est alors introduit dans un appareil de traction capable d'effectuer le pelage ou décollement de la bande sous un angle de 180° et avec une vitesse de séparation de 300 mm par minute. L'appareil mesure la force requise pour décoller la bande dans ces conditions. Le résultat est exprimé en N/cm. Le peel à 180° sur plaque de verre des colles destinées à la fabrication d'étiquettes auto-adhésives est généralement supérieur à 2 N/cm, de préférence à 4 N/cm.

Le pouvoir collant immédiat ou tack de l'HMPSA selon l'invention est évalué par le test d'adhésion instantanée dit de la boucle, décrit dans la méthode de test FINAT n° 9. L'HMPSA est préalablement enduit à raison de 20 g/m² sur le même film que pour le test de pelage précédent, de manière à obtenir une bande rectangulaire de 25 mm sur 175 mm. Les 2 extrémités de cette bande sont jointes de manière à former une boucle dont la couche d'adhésif est orientée vers l'extérieur. Les 2 extrémités jointes sont placées dans la mâchoire mobile d'un appareil de traction capable d'imposer une vitesse de déplacement de 300 mm/minute selon un axe vertical avec possibilité d'aller et retour. La partie inférieure de la boucle placée en position verticale est d'abord mise en contact avec une plaque de verre horizontale de 25 mm sur 30 mm sur une zone carrée d'environ 25 mm de côté. Dès cette mise en contact, le sens de déplacement de la mâchoire est inversé. Le pouvoir collant immédiat est la valeur maximale de la force nécessaire pour que la boucle se décolle complètement de la plaque. Le pouvoir collant d'un PSA est généralement supérieur ou égal à 1 N/cm².

L'aptitude au décollement à chaud en milieu aqueux basique d'étiquettes enduites de l'HMPSA selon l'invention et préalablement fixées sur substrat de verre est évaluée par le test suivant.

On utilise des bouteilles de verre de diamètre 7 cm et de hauteur environ 20 cm réparties en 2 groupes en fonction de la nature du verre qui les constitue. Ce verre présente en effet 2 types de couche superficielle, selon le traitement d'enduction qui a été appliqué lors de la fabrication des bouteilles. Le 1^{er} type de couche comprend essentiellement de l'oxyde d'étain. Le 2^{ème} type comprend essentiellement une émulsion de cire de polyéthylène oxydée qui a été appliquée sur une couche d'oxyde d'étain. Le 2^{ème} type de couche est caractéristique de bouteilles de verre neuves. Le 1^{er} type est caractéristique de bouteilles de verre ayant déjà été immergées dans une solution aqueuse basique, durant au moins un cycle de nettoyage. Le 1^{er} groupe de bouteilles est désigné ci-après par "SnO", le 2^{ème} par le sigle "PE".

L'HMPSA à tester est enduit sur la même couche support et dans les mêmes conditions que dans le test de pelage à 180°. Des étiquettes rectangulaires (de 7 cm sur 5 cm) sont découpées dans le support auto-adhésif ainsi obtenu.

4 bouteilles de verre, 2 du type PE et 2 du type SnO, sont chacune revêtues de l'une de ces étiquettes, qui est fixée par simple pression. Puis, avant poursuite du test et pour chaque groupe de bouteilles étiquetées de type PE et SnO :
- une des 2 bouteilles étiquetées est simplement laissée 48 heures à température ambiante, et
- l'autre bouteille étiquetée est laissée 24 heures à température ambiante, puis placée durant 24 heures dans une étuve à 50 °C avec une humidité relative inférieure à 25 %, puis de nouveau 2 heures à température ambiante.

Le but de ces 2 traitements climatiques est de simuler le comportement d'une bouteille étiquetée respectivement au temps initial (au moment de son étiquetage), et après vieillissement (c'est-à-dire à un stade ultérieur de son cycle de vie après commercialisation).

On poursuit alors le test en immergeant chaque bouteille étiquetée dans un bain d'eau thermostaté à 80°C ayant un pH de 12, et en mesurant à compter de cette immersion le temps mis par l'étiquette à se décoller totalement de la bouteille.

Les exemples suivants sont donnés à titre purement illustratif de l'invention et ne sauraient être interprétés de manière à en limiter la portée.

Les compositions figurant dans le tableau 1 suivant sont préparées par simple mélange à chaud à 180 °C des ingrédients indiqués. Outre ces ingrédients, ces compositions contiennent également 1 % de stabilisants ou antioxydants.

Les résultats des tests effectués sont indiqués dans le tableau 2.

Durant la mise en oeuvre du test de décollement à chaud en milieu aqueux basique, on n'observe, après séparation de l'étiquette, aucun résidu d'adhésif sur la surface des bouteilles. La perte en HMPSA de l'étiquette est voisine de 0%, ce qui indique, pour chacun de ces exemples, que la solution aqueuse basique de lavage ne contient pas d'HMPSA.

| Tableau 1 (teneur en %) | | | | | | |
|---|---|---|---|---|---|---|
| Ingredient | Reference | Ex. 1 | Ex. 2 | Ex. 3 | Ex. 4 | Ex. 5 |
| Kraton^{®} D1124 | 41 | 40 | - | 40 | 40 | 40 |
| Kraton^{®} D1165 | - | - | 40 | - | - | - |
| Sylvarez^{®} ZT 105 LT | 19 | 16 | 20 | 16 | 16 | 16 |
| Escorez^{®} 5615 | 20 | 16 | 20 | 16 | 16 | 16 |
| Sylvalite^{®} RE 100S | - | - | 5 | - | - | - |
| Sylvatac^{®} RE 12 | 14 | 13 | - | 13 | 13 | 13 |
| SUPRA(Pripol^{®} 1017) | - | 10 | 6 | - | - | - |
| SUPRA(Pripol^{®} 1040) | - | - | - | 10 | - | - |
| SUPRA(Pripol^{®} 1013) | - | - | - | - | 10 | - |
| SUPRA(Unidyme^{®} 14) | - | - | - | - | - | 10 |
| Primer^{®} 352 | 5 | 4 | 8 | 4 | 4 | 4 |

| Tableau 2 | | | | | | |
|---|---|---|---|---|---|---|
| Test | Référence | Exemple 1 | Exemple 2 | Exemple 3 | Exemple 4 | Exemple 5 |
| Peel 180° sur verre (N/cm) | 4 | 6,2 | 6,4 | 6 | 5,8 | 5,7 |
| Adhesion instantanée de la boucle (N/cm²) | 4 | 3,5 | 4,1 | 3,2 | 3 | 3,4 |
| Temps de decollement de l'étiquette sur bouteille de type SnO au temps initial (en s) | 30 | 19 | 15 | 14 | 11 | 8 |
| Temps de decollement de l'étiquette sur bouteille de type SnO après vieillissement (en s) | > 180 | 25 | 21 | 20 | 17 | 29 |
| Temps de decollement de l'étiquette sur bouteille de type PE au temps initial (en s) | > 180 | 15 | 11 | 25 | 15 | 13 |
| Temps de decollement de l'étiquette sur bouteille de type PE après vieillissement (en s) | > 180 | 28 | 20 | 36 | 20 | 22 |

## Revendications

1. Composition adhésive thermofusible sensible à la pression (HMPSA) comprenant :
- a) de 25 à 50 % d'un ou plusieurs copolymères blocs styréniques choisis dans le groupe comprenant les SBS, SIS, SIBS, SEBS et SEPS ;
- b) de 35 à 75 % d'une ou plusieurs résines tackifiantes compatibles liquides ou ayant une température de ramollissement inférieure à 150 °C ;
- c) de 1 à 20 % d'un ou plusieurs polymères supramoléculaires obtenus par réaction entre :
- la 1-(2-aminoéthyl)-2-imidazolidone (également dénommée Uréïdo DiEthylène TriAmine ou UDETA) de formule (I) : 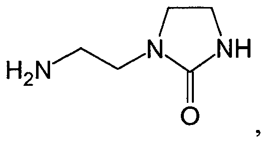 et
- une composition d'acides gras comprenant :
- de 51 à 100 % d'un ou plusieurs dimères d'acides gras identiques ou différents et/ou d'un ou plusieurs trimères d'acides gras identiques ou différents ; et
- de 0 à 49 % d'un ou plusieurs monomères d'acides gras identiques ou différents.

2. HMPSA selon la revendication 1, **caractérisé en ce que** la teneur en copolymère bloc styrénique varie de 30 à 50 %.

3. HMPSA selon l'une des revendications 1 ou 2, **caractérisé en ce que** le copolymère bloc styrénique est un SIS linéaire ou radial.

4. HMPSA selon l'une des revendications 1 à 3, **caractérisé en ce que** la résine tackifiante est liquides ou a une température de ramollissement comprise entre 90 et 120°C.

5. HMPSA selon l'une des revendications 1 à 4, **caractérisé en ce que** la teneur en résine tackifiante est comprise entre 40 et 55%.

6. HMPSA selon l'une des revendications 1 à 5, **caractérisé en ce que** le polymère supramoléculaire est obtenu par une réaction, selon des quantités sensiblement stoechiométriques, de l'UDETA de formule (I) avec une composition d'acides gras monomères et/ou dimères et/ou trimères issus de la polymérisation d'acides gras monomères insaturés majoritairement en C18, ladite composition comprenant de 0 à 10 % de monomères et de 90 à 100 % de mélange de dimères et trimères.

7. HMPSA selon l'une des revendications 1 à 6, **caractérisé en ce que** la composition d'acides gras avec lequel on fait réagir l'UDETA de formule (I) comprend de 0 à 5 % de monomères et de 95 à 100 % de mélange de dimère et trimère.

8. HMPSA selon l'une des revendications 1 à 7, **caractérisé en ce que** la teneur du polymère supramoléculaire est comprise entre 3 et 15 %.

9. HMPSA selon l'une des revendications 1 à 8, **caractérisé en ce qu'**il comprend de 0,1 à 2 % d'un ou plusieurs stabilisants ou anti-oxydants.

10. Système multicouche comprenant :
- une couche d'adhésif constituée de l'HMPSA tel que défini dans l'une des revendications 1 à 9 ;
- une couche support imprimable adjacente à ladite couche d'adhésif, constituée de papier ou de film polymère à une ou plusieurs couches ; et
- une couche protectrice adjacente à ladite couche d'adhésif.

11. Système multicouche selon la revendication 10, **caractérisé en ce qu'**on utilise comme couche support imprimable :
- du papier ayant un grammage compris entre 60 et 110 g/m², ou
- un film thermo-rétractable constitué de PET, de PVC ou d'OPP ; ou encore
- un film bi-couche OPP/PET dont la couche d'OPP est adjacente à la couche d'adhésif.

12. Système multicouche selon l'une des revendications 10 ou 11, **caractérisé en ce que** l'épaisseur de la couche d'adhésif correspond à une quantité d'HMPSA comprise entre 7 et 50 g/m², exprimée par unité de surface de la couche support.

13. Etiquette auto-adhésive susceptible d'être obtenue par transformation du système multicouche tel que défini dans l'une des revendications 10 à 12.

14. Article revêtu de l' étiquette auto-adhésive telle que définie dans la revendication 13.

15. Article selon la revendication 14, consistant en un emballage ou récipient constitué de verre ou d'une matière plastique, de préférence une bouteille de verre.

## Patentansprüche

1. Schmelzhaftklebstoffzusammensetzung (HMPSA-Zusammensetzung), umfassend:
- a) 25 bis 50% eines oder mehrerer Styrolblockcopolymere, die aus der Gruppe umfassend SBS, SIS, SIBS, SEBS und SEPS ausgewählt sind,
- b) 35 bis 75% eines oder mehrerer verträglicher klebrigmachender Harze, die flüssig sind oder eine Erweichungstemperatur von weniger als 150°C aufweisen;
- c) 1 bis 20% eines oder mehrerer supramolekularer Polymere, erhalten durch Reaktion zwischen:
- 1-(2-Aminoethyl)-2-imidazolidon (das auch als UreidoDiEthylenTriAmin oder UDETA bezeichnet wird) der Formel (I): 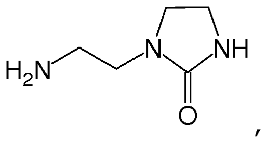 und
- einer Fettsäurezusammensetzung, umfassend:
- 51 bis 100% eines oder mehrerer Dimere gleicher oder verschiedener Fettsäuren und/oder eines oder mehrerer Trimere gleicher oder verschiedener Fettsäuren und
- 0 bis 49% eines oder mehrerer Monomere gleicher oder verschiedener Fettsäuren.

2. HMPSA nach Anspruch 1, **dadurch gekennzeichnet, dass** der Gehalt an Styrolblockcopolymer von 30 bis 50% variiert.

3. HMPSA nach Anspruch 1 oder 2, **dadurch gekennzeichnet, dass** es sich bei dem Styrolblockcopolymer um ein lineares oder radiales SIS handelt.

4. HMPSA nach einem der Ansprüche 1 bis 3, **dadurch gekennzeichnet, dass** das klebrigmachende Harz flüssig ist oder eine Erweichungstemperatur zwischen 90 und 120°C aufweist.

5. HMPSA nach einem der Ansprüche 1 bis 4, **dadurch gekennzeichnet, dass** der Gehalt an klebrigmachendem Harz zwischen 40 und 55% liegt.

6. HMPSA nach einem der Ansprüche 1 bis 5, **dadurch gekennzeichnet, dass** das supramolekulare Polymer durch eine Reaktion von UDETA der Formel (I) mit einer Zusammensetzung monomerer und/oder dimerer und/oder trimerer Fettsäuren aus der Polymerisation von ungesättigten monomeren Fettsäuren mit überwiegend 18 C-Atomen in weitgehend stöchiometrischen Mengen, wobei die Zusammensetzung 0 bis 10% Monomere und 90 bis 100% eines Gemischs von Dimeren und Trimeren umfasst, erhalten wird.

7. HMPSA nach einem der Ansprüche 1 bis 6, **dadurch gekennzeichnet, dass** die Zusammensetzung von Fettsäuren, mit der das UDETA der Formel (I) umgesetzt wird, 0 bis 5% Monomere und 95 bis 100% eines Gemischs von Dimeren und Trimeren umfasst.

8. HMPSA nach einem der Ansprüche 1 bis 7, **dadurch gekennzeichnet, dass** der Gehalt an supramolekularem Polymer zwischen 3 und 15% liegt.

9. HMPSA nach einem der Ansprüche 1 bis 8, **dadurch gekennzeichnet, dass** sie 0,1 bis 2% eines oder mehrerer Stabilisatoren oder Antioxidantien umfasst.

10. Mehrschichtsystem, umfassend:
- eine Klebstoffschicht, bestehend aus dem HMPSA gemäß einem der Ansprüche 1 bis 9,
- eine bedruckbare Trägerschicht, die der Klebstoffschicht benachbart ist und aus Papier oder Polymerfolie mit einer oder mehreren Schichten besteht; und
- eine Schutzschicht, die der Klebstoffschicht benachbart ist.

11. Mehrschichtsystem nach Anspruch 10, **dadurch gekennzeichnet, dass** als bedruckbare Trägerschicht
- Papier mit einem Flächengewicht zwischen 60 und 110 g/m² oder
- eine wärmeschrumpfbare Folie aus PET, PVC oder OPP oder auch
- eine OPP/PET-Zweischichtfolie, deren OPP-Schicht der Klebstoffschicht benachbart ist,
verwendet wird.

12. Mehrschichtsystem nach Anspruch 10 oder 11, **dadurch gekennzeichnet, dass** die Dicke der Klebstoffschicht einer HMPSA-Menge zwischen 7 und 50 g/m², ausgedrückt pro Flächeneinheit der Trägerschicht, entspricht.

13. Selbstklebeetikett, das durch Umwandlung des Mehrschichtsystems gemäß einem der Ansprüche 10 bis 12 erhältlich ist.

14. Artikel, der mit dem Selbstklebeetikett gemäß Anspruch 13 beschichtet ist.

15. Artikel nach Anspruch 14, bestehend aus einer Verpackung oder einem Behälter aus Glas oder Kunststoff, vorzugsweise einer Glasflasche.

## Claims

1. Hot-melt pressure-sensitive adhesive (HMPSA) composition comprising:
- a) 25 to 50% of one or more styrene block copolymers chosen from the group comprising SBS, SIS, SIBS, SEBS and SEPS;
- b) 35 to 75% of one or more compatible tackifying resins which are liquid or have a softening temperature below 150°C; and
- c) 1 to 20% of one or more supramolecular polymers obtained by reaction between:
- 1-(2-aminoethyl)-2-imidazolidone (also called Ureido DiEthylene TriAmine or UDETA) of formula (I) : 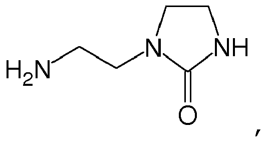 and
- a fatty acid composition comprising:
- 51 to 100% of one or more dimers of identical or different fatty acids and/or of one or more trimers of identical or different fatty acids; and
- 0 to 49% of one or more monomers of identical or different fatty acids.

2. HMPSA according to Claim 1, **characterized in that** the styrene block copolymer content varies from 30 to 50%.

3. HMPSA according to either of Claims 1 and 2, **characterized in that** the styrene block copolymer is a linear or radial SIS.

4. HMPSA according to one of Claims 1 to 3, **characterized in that** the tackifying resin is liquid or has a softening temperature between 90 and 120°C.

5. HMPSA according to one of Claims 1 to 4, **characterized in that** the tackifying resin content is between 40 and 55%.

6. HMPSA according to one of Claims 1 to 5, **characterized in that** the supramolecular polymer is obtained by reaction, in substantially stoichiometric quantities, of UDETA of formula (I) with a monomeric and/or dimeric and/or trimeric fatty acid composition resulting from the polymerization of predominantly C₁₈ unsaturated monomeric fatty acids, said composition comprising 0 to 10% of monomers and 90 to 100% of a mixture of dimers and trimers.

7. HMPSA according to one of Claims 1 to 6, **characterized in that** the fatty acid composition with which the UDETA of formula (I) is reacted comprises 0 to 5% of monomers and 95 to 100% of a mixture of dimers and trimers.

8. HMPSA according to one of Claims 1 to 7, **characterized in that** the supramolecular polymer content is between 3 and 15%.

9. HMPSA according to one of Claims 1 to 8, **characterized in that** it comprises 0.1 to 2% of one or more stabilizers or antioxidants.

10. Multilayer system comprising:
- an adhesive layer consisting of the HMPSA as defined in one of Claims 1 to 9;
- a printable support layer adjacent to said adhesive layer, consisting of paper or a polymer film having one or more layers; and
- a protective layer adjacent to said adhesive layer.

11. Multilayer system according to Claim 10, **characterized in that** it uses, as printable support layer:
- paper with a weight of between 60 and 110 g/m²; or
- a heat-shrinkable film made of PET, PVC or OPP; or else
- an OPP/PET bilayer film, the OPP layer of which is adjacent to the adhesive layer.

12. Multilayer system according to either of Claims 10 and 11, **characterized in that** the thickness of the adhesive layer corresponds to an amount of HMPSA between 7 and 50 g/m², expressed per unit area of the support layer.

13. Self-adhesive label that can be obtained by conversion of the multilayer system as defined in one of Claims 10 to 12.

14. Article coated with the self-adhesive label as defined in Claim 13.

15. Article according to Claim 14, consisting of a package or container made of glass or a plastic, preferably a glass bottle.
